# EUROPÄISCHE PATENTSCHRIFT

(11) **EP 3 253 693 B1**
(45) Veröffentlichungstag und Bekanntmachung des Hinweises auf die Patenterteilung: **19.06.2019**
(21) Anmeldenummer: 16701650.0
(22) Anmeldetag: 27.01.2016
(51) Int. Cl.: B65G 1/04, B66F 9/07, B66F 9/14

(54) **LÄNGSFÖRDERER ZUM EIN- UND AUSLAGERN VON LADEHILFSMITTELN**
LONGITUDINAL CONVEYOR FOR STORING AND RETRIEVING LOADING AIDS
TRANSPORTEUR LONGITUDINAL PERMETTANT DE STOCKER ET DE DÉSTOCKER DES AUXILIAIRES DE CHARGEMENT

(30) Priorität: 06.02.2015 DE 102015202141
(43) Veröffentlichungstag der Anmeldung: 13.12.2017
(73) Patentinhaber: Vanderlande Industries B.V., 5466 RB Veghel (NL)
(72) Erfinder: GLIGOR, Traian, 57250 Netphen (DE)
(74) Vertreter: Hoffmann Eitle
(86) Internationale Anmeldenummer: PCT/EP2016/051662
(87) Internationale Veröffentlichungsnummer: WO 2016/124460

(56) Entgegenhaltungen:
- EP-A1- 2 433 882
- DE-U1-202004 004 620

## Beschreibung

### TECHNISCHES GEBIET

Die vorliegende Erfindung betrifft eine Vorrichtung zum Bewegen eines Objekts entlang einer Längsrichtung zumindest zwischen einer ersten Position und einer zweiten Position, wobei es sich bei dieser Vorrichtung insbesondere um einen Längsförderer zum Ein- und Auslagern von Ladehilfsmitteln handeln kann. Die Vorrichtung umfasst eine Basis, einen Arm, der an der Basis angeordnet ist, einen Mitnehmer, der durch den Arm entlang der Längsrichtung bewegbar ist, wobei der Mitnehmer relativ zum Arm schwenkbar und durch eine Schwenkbewegung zwischen einer Eingriffsposition und einer Freigabeposition umstellbar ist, und einen ersten Antrieb zum Umstellen des Mitnehmers.

### STAND DER TECHNIK

Bei der Beschickung und Verwaltung von großen Lagerregalen werden üblicherweise verfahrbare Transportvorrichtungen eingesetzt, mit denen in den Lagerregalen gelagerte Objekte beispielsweise mittels Ladehilfsmitteln oder auch direkt, das heißt ohne solche Ladehilfsmittel, zwischen verschiedenen Lagerplätzen und anderen Positionen wie einer Aufnahme oder Entnahmeposition bewegt werden. Hierfür ist es erforderlich, dass die Objekte mit oder ohne Ladehilfsmittel auf die verfahrbare Transportvorrichtung und von ihr herunter bewegt werden können. Dies muss möglichst zuverlässig automatisierbar sein.

In einer üblichen Variante zum Bewegen der zu lagernden Objekte auf oder von der Transportvorrichtung werden die Objekte unmittelbar oder über Ladehilfsmittel unterfahren und anschließend angehoben und bewegt. Eine hierfür geeignete Vorrichtung ist beispielsweise aus der deutschen Patentanmeldung DE 10 2012 017 985 A1 bekannt. Das Dokument DE 20 2004 004620U1 offenbart eine Vorrichtung zum Bewegen eines Objekts nach dem Oberbegriff des Anspruchs 1.

Alternativ ist es üblich, die Objekte entweder unmittelbar oder bevorzugt über Ladehilfsmittel durch eine Verschiebebewegung aus dem Lagerregal auf die Transportvorrichtung zu ziehen bzw. von dieser Transportvorrichtung in einen vorgegebenen Regalplatz oder eine Entnahmeposition zu schieben. Dabei wird das Objekt oder das Ladehilfsmittel mit dem darauf befindlichen Objekt nicht angehoben, sondern lediglich über eine Oberfläche geschoben. Die vorliegende Erfindung betrifft vor allem diese zuletzt beschriebene Alternative.

Eine übliche Ausgestaltung einer solchen Transportvorrichtung umfasst zwei zueinander parallele und mit Mitnehmern bestückte Teleskoparme, die dazu ausgestaltet sind, ein oder mehrere Ladehilfsmittel kraftschlüssig oder formschlüssig zu ergreifen und zu verschieben.

Ein mit den bekannten Transportvorrichtungen verbundenes Problem liegt darin, dass zum Antreiben und Überwachen der an den Teleskoparmen angebrachten Mitnehmer eine relativ aufwendige und empfindliche Übertragung von elektrischer Energie und elektrischen/elektronischen Daten erforderlich ist.

Bisher werden Steuerungssignale für eine Bewegung des Mitnehmers sowie die für das Betreiben des unmittelbar am Mitnehmer angeordneten Antriebsmotors erforderliche elektrische Energie über eine Kabelverbindung von der Basis der Transportvorrichtung zu dem an einem anderen Ende des Teleskoparms angeordneten Antrieb für den Mitnehmer übertragen. Aufgrund des häufigen Ein- und Ausfahrens der Teleskoparme durchläuft dieses Kabel eine große Zahl von Biegezyklen, so dass ein relativ frühes Versagen der Kabelverbindung zu befürchten ist. Außerdem muss für die Kabelverbindung eine Führung vorgesehen werden, damit das Kabel nicht mit anderen Teilen der Vorrichtung oder mit Fremdkörpern interferieren kann. Eine solche Führung ist aufwendig, schränkt die Bewegungsfreiheit der Vorrichtung ein und erhöht auch das Gewicht der Vorrichtung.

### DARSTELLUNG DER ERFINDUNG

Vor dem Hintergrund des oben beschriebenen Standes der Technik besteht eine Aufgabe der Erfindung darin, eine leichte und kompakte Transportvorrichtung zum Ein- und Auslagern von Ladehilfsmitteln in ein Lagerregalsystem bereitzustellen. Insbesondere liegt die Aufgabe der vorliegenden Erfindung darin, eine Vorrichtung zum Bewegen eines Objekts entlang einer Längsrichtung zumindest zwischen einer ersten Position und einer zweiten Position bereitzustellen, wobei die Vorrichtung eine Basis, einen Arm, der an der Basis angeordnet ist, einen Mitnehmer, der durch den Arm entlang der Längsrichtung bewegbar ist und wobei der Mitnehmer relativ zum Arm schwenkbar und durch eine Schwenkbewegung zwischen einer Eingriffsposition und einer Freigabeposition umstellbar ist, und einen ersten Antrieb zum Umstellen des Mitnehmers aufweist, welche Vorrichtung gegenüber dem Stand der Technik weniger fehleranfällig und damit zuverlässiger ist. Eine weitere Aufgabe der vorliegenden Erfindung liegt darin, eine solche Vorrichtung bereitzustellen, die leicht herzustellen, unkompliziert zu betreiben und gegenüber äußeren Störungen möglichst unempfindlich ist.

Die Aufgabe der vorliegenden Erfindung wird durch die Vorrichtung nach Anspruch 1 gelöst. Vorteilhafte Ausgestaltungen der erfindungsgemäßen Vorrichtung ergeben sich aus den Unteransprüchen.

Die erfindungsgemäße Vorrichtung zum Bewegen eines Objekts entlang einer Längsrichtung zumindest zwischen einer ersten Position und einer zweiten Position umfasst eine Basis, einen Arm, der an der Basis angeordnet ist, einen Mitnehmer, der durch den Arm entlang der Längsrichtung bewegbar ist, wobei der Mitnehmer relativ zum Arm schwenkbar und durch eine Schwenkbewegung zwischen einer Eingriffsposition und einer Freigabeposition umstellbar ist, und einen ersten Antrieb zum Umstellen des Mitnehmers. Dabei ist der erste Antrieb über einen Kopplungsmechanismus mit dem Mitnehmer wirkverbunden, wobei der Kopplungsmechanismus zumindest zwei relativ zueinander entlang der Längsrichtung verfahrbare, mit Zähnen versehene Wellen aufweist, wobei die Wellen über die Zähne miteinander in Eingriff stehen, sodass eine Drehbewegung des ersten Antriebs mit der Schwenkbewegung des Mitnehmers gekoppelt ist.

Durch die erfindungsgemäße Vorrichtung muss der erste Antrieb zum Umstellen des Mitnehmers, das heißt zum Ein- und Ausschwenken des durch den Arm beispielsweise in ein Regal fahrenden Mitnehmers, nicht mehr in der Nähe des Mitnehmers angeordnet sein, sondern kann sich beispielsweise an der Basis der Vorrichtung befinden. Eine Drehmomentübertragung zwischen dem ersten Antrieb und dem Mitnehmer erfolgt durch den Kopplungsmechanismus rein mechanisch. Auf diese Weise kann also die bisher erforderliche elektrische Verbindung zum Übertragen von Energie und Daten vermieden werden. Der stattdessen verwendete mechanische Kopplungsmechanismus zwischen dem ersten Antrieb und dem Mitnehmer ist wesentlich widerstandsfähiger gegenüber Ermüdung und erfordert keine Kabelführung oder ähnliche Peripheriekonstruktionen. Dadurch, dass der mechanische Kopplungsmechanismus der erfindungsgemäßen Vorrichtung nicht nur Informationen, sondern auch das für das Umstellen des Mitnehmers erforderliche Drehmoment überträgt, kann das erhebliche Gewicht des Antriebs aus der Umgebung des Mitnehmers entfernt und an der Basis angeordnet werden. Dies macht eine deutlich leichtere und schlankere Konstruktion des Arms und der gesamten Vorrichtung möglich und erlaubt zudem eine schnellere Bewegung des Arms und damit kürzere Bedienzeiten.

Unter dem von der Vorrichtung zu bewegenden "Objekt" kann insbesondere ein Ladehilfsmittel verstanden werden. Es ist jedoch auch möglich, dass ein anderes Objekt ohne separates Ladehilfsmittel unmittelbar durch die erfindungsgemäße Vorrichtung bewegt werden kann.

Die "Längsrichtung" im Zusammenhang mit der vorliegenden Erfindung wird auch als Z-Richtung bezeichnet. Die Z-Richtung ist bei Vorrichtungen zum Ein- und Auslagern in bzw. aus einem Lagerregalfach die Richtung, die von einer Gasse entlang einer Regalfront in das Innere des Lagerregalfachs oder aus diesem heraus zeigt. Der Vollständigkeit halber wird hiermit definiert, dass es sich bei einer horizontalen Richtung, die eine Bewegungsrichtung der Vorrichtung entlang der Gasse bezeichnet, um die X-Richtung handelt, während die Y-Richtung eine vertikale Bewegungsrichtung bezeichnet, um beispielsweise zwischen verschiedenen Etagen des Lagerregals hin und her zu fahren. Für alle genannten Richtungen gibt es noch eine positive und eine negative Richtung.

Die erfindungsgemäße Vorrichtung ist dazu geeignet, ein Objekt entlang der Längsrichtung zwischen zumindest zwei Positionen zu bewegen. Es ist jedoch auch möglich, dass die Vorrichtung mehr als zwei Positionen, insbesondere drei Positionen, anfahren und Objekte zwischen diesen Positionen bewegen kann. Bei der ersten Position kann es sich beispielsweise um eine Position auf einem Lastaufnahmegerät, beispielsweise auf der Basis der Vorrichtung, handeln. Die erste Position wäre im genannten Beispiel die Position, die das Objekt einnimmt, wenn es aus dem Regal auf die Vorrichtung gezogen wurde, um zu einer bestimmten Regalposition oder beispielsweise zu einer Entnahmeposition bewegt zu werden. Die zweite Position kann beispielsweise eine Position in dem Lagerregal sein.

Je nach Größe des Lagerregals kommt es vor, dass mehrere in Z-Richtung hintereinander liegende Positionen in einem Lagerregalfach angesteuert werden können. Für das Ein- und Auslagern eines solchen Lagerregals wird daher bevorzugt, dass die Vorrichtung auch mehr als eine erste und eine zweite Position, sondern insbesondere auch eine dritte Position anfahren kann, wobei sowohl die zweite als auch die dritte Position innerhalb des Lagerregals liegen.

Außerdem können weitere Positionen hintereinander auf derselben Seite der Vorrichtung oder auf gegenüberliegenden Seiten der Vorrichtung, d. h. in positiver und negativer Z-Richtung vorgesehen sein.

Bei der "Basis" der erfindungsgemäßen Vorrichtung handelt es sich beispielsweise um einen Rahmen, ein Gerüst, einen Korpus, ein Chassis oder dergleichen einer bevorzugt verfahrbaren Transportvorrichtung. Die Basis dient dazu, den Arm zu halten und kann darüber hinaus insbesondere auch zum Halten des ersten Antriebs eingesetzt werden. Der erste Antrieb kann jedoch auch an anderen Teilen der Vorrichtung angeordnet und angebracht sein. In einer bevorzugten Ausführungsform weist die Basis eine Ladefläche zum Aufnehmen des Objekts in der ersten Position auf. Eine solche Ladefläche ist jedoch nicht unbedingt erforderlich und kann auch an einem anderen Teil der erfindungsgemäßen Vorrichtung oder auch an einer separaten Vorrichtung vorgesehen sein.

Der relativ zum Arm schwenkbare Mitnehmer kann direkt oder indirekt an den Arm angebracht sein. In einer bevorzugten Ausführungsform ist der Mitnehmer unmittelbar an einer der Wellen des Kopplungsmechanismus angebracht, kann jedoch auch anderweitig befestigt sein. Wesentlich ist lediglich, dass der Mitnehmer durch den Arm entlang der Längsrichtung bewegbar ist, sodass er die Bewegung des Armes auf das zu bewegende Objekt übertragen kann.

Bei den "Wellen" kann es sich insbesondere um zylinderförmige, stirnverzahnte Wellen handeln. Mit anderen Worten können die Wellen auch als Zahnräder bezeichnet werden, wobei die Zahnräder vorzugsweise in ihrer axialen Richtung eine größere Ausdehnung haben als in ihrer radialen Richtung. Die Zähne der Zahnräder können entlang der axialen Längsrichtung durchgehend oder auch unterbrochen sein. Ferner ist es möglich, dass die Zähne auf den Wellen nur über einen Teil des Umfangs der Wellen angeordnet sind. Bevorzugt wird jedoch, dass die Zähne sich entlang des gesamten Umfangs der Welle erstrecken, weil dies eine Montage und auch den Betrieb der Vorrichtung erleichtert, ohne einen erheblichen konstruktiven Mehraufwand zu bedeuten.

Durch die Ausgestaltung der Wellen ist es möglich, dass der Mitnehmer auch während seiner Bewegung durch den Arm entlang der Längsrichtung mit dem ersten Antrieb gekoppelt ist, sodass der erste Antrieb durch eine gezielte Drehbewegung oder eine festgehaltene Position auch entlang der Längsbewegung des Mitnehmers zwischen der Eingriffsposition und der Freigabeposition umstellen oder diese aufrecht erhalten kann.

In einer bevorzugten Ausführungsform ist die Vorrichtung zumindest in einer anderen Richtung als der Längsrichtung verfahrbar. Hierbei kann es sich um die oben bereits genannte X-Richtung und/oder die Y-Richtung und/oder die Z-Richtung handeln und auch eine Superposition dieser Richtungen ist als Bewegungsrichtung für die gesamte Vorrichtung möglich.

Auf diese Weise kann mithilfe der Vorrichtung ein Objekt zwischen verschiedenen Positionen hin und her befördert werden, wobei diese Positionen innerhalb des Lagerregals, aber auch außerhalb des Lagerregals, beispielswiese an einer Beschickungsposition, einer Entnahmeposition oder einer Inspektionsposition, liegen können.

Mit Vorteil ist durch den Mitnehmer entlang der Längsrichtung eine formschlüssige Verbindung zwischen dem Arm und dem Objekt herstellbar. Mit anderen Worten kontaktiert der Mitnehmer bevorzugt das Objekt an einer der Bewegungsrichtung gegenüber liegenden Seite stirnseitig und muss keine Klemmkraft auf das Objekt ausüben. Ein Vorteil der formschlüssigen Verbindung zwischen dem Arm und dem Objekt durch den Mitnehmer liegt darin, dass während des Bewegens des Mitnehmers entlang der Längsrichtung kein Drehmoment auf den Kopplungsmechanismus ausgeübt werden muss, um beispielsweise eine kraftschlüssige Verbindung aufrechterhalten zu können. Dies hat zur Folge, dass zwischen den Zähnen der Wellen des Kopplungsmechanismus während des Bewegens entlang der Längsrichtung keine bedeutende Reibungskraft auftritt, was die Bewegung des Mitnehmers entlang der Längsrichtung erheblich erleichtert und damit auch eine kleinere Auslegung eines zweiten Antriebs zum Bewegen des Mitnehmers entlang der Längsrichtung, d. h. beispielsweise zum Ein- und Ausfahren oder Verschieben des Arms, erlaubt.

Mit Vorteil ist zumindest eine der Wellen an dem Arm drehbar gelagert, bevorzugt sind alle der Wellen an dem Arm drehbar gelagert. Eine Lagerung der Wellen an dem Arm führt zu einer besonders einfachen Ausgestaltung der Vorrichtung. In diesem Fall kann der Arm sowohl zum Lagern der Wellen als auch beispielsweise zum Stützen des Mitnehmers oder anderer Teile eingesetzt werden. Dies ermöglicht es, eine besonders effiziente Konstruktion zu realisieren. Alternativ können die Wellen insgesamt oder auch einzelne der Wellen an einer separaten Lagervorrichtung, unabhängig vom Arm, gelagert sein. Die Lagervorrichtung kann sich beispielsweise parallel zu einer Bewegung des Armes verschieben und die Wellen sich entsprechend bewegen lassen. Eine solche Konstruktion ist jedoch verhältnismäßig aufwendig und wird daher nicht bevorzugt.

Gemäß einer bevorzugten Ausführungsform weist der Arm zumindest zwei relativ zueinander entlang der Längsrichtung verfahrbare Elemente auf, wobei der Arm bevorzugt als Teleskoparm ausgebildet ist, insbesondere wobei eines der Elemente relativ zur Basis ortsfest angeordnet ist, während das zumindest eine weitere Element relativ zur Basis entlang der Längsrichtung verfahrbar ist. Insbesondere ist dabei der Mitnehmer an einem in der Längsrichtung am weitesten von der Basis entfernbaren der Elemente angeordnet.

Neben einer üblichen Teleskoparmanordnung, bei der einzelne Elemente des Armes gleichmäßig relativ zueinander verfahren werden, um die Gesamtausdehnung des Armes zu vergrößern oder zu verkleinern, ist es auch denkbar, dass der Arm Elemente aufweist, die nacheinander vollständig bewegt werden. Dies bedeutet mit anderen Worten, dass beispielsweise bei einem dreigliedrigen Arm mit einem festen Element und zwei beweglichen Elementen im Fall eines Teleskoparms die beiden beweglichen Elemente zu gleichen Teilen relativ zum festen Element ausgefahren oder eingefahren werden, während im Fall eines nicht als Teleskoparm ausgebildeten dreigliedrigen Armes die Möglichkeit besteht, dass ein erstes der beiden beweglichen Elemente vollständig ausgefahren wird, bevor das zweite der beiden beweglichen Elemente ausgefahren wird.

Mit Vorteil ist bei dieser bevorzugten Ausführungsform an jedem der Elemente des Arms je eine Welle des Kopplungsmechanismus drehbar gelagert. Es ist daneben jedoch auch möglich, dass eine Welle an mehreren Elementen des Armes gelagert ist oder dass mehrere Wellen an einem einzigen Element des Arms drehbar gelagert sind, beispielswiese um eine Bewegungsrichtung der Rotationsbewegung umzukehren.

In einer bevorzugten Ausführungsform sind die Zähne der Wellen als Stirnverzahnung ausgebildet. Bevorzugt ist die Stirnverzahnung dabei achsparallel ausgebildet und insbesondere verlaufen die Zähne über mindestens 50%, bevorzugt mindestens 70%, weiter bevorzugt mindestens 90% der gesamten achsparallelen Länge der Welle.

Alternativ zu einer Stirnverzahnung sind auch andere Verzahnungen grundsätzlich für eine Realisierung der Erfindung denkbar. Die Stirnverzahnung bietet jedoch eine besonders leichte Ausgestaltung der Erfindung, insbesondere wenn die Stirnverzahnung achsparallel ausgebildet ist. Eine andere, beispielsweise schrägverzahnte, Ausgestaltung der Verzahnung ist jedoch grundsätzlich im Sinne der Erfindung möglich.

Mit Vorteil ist der erste Antrieb über eine Kurbelschwinge mit dem Kopplungsmechanismus wirkverbunden. Mit der Kurbelschwinge ist es möglich, dass der erste Antrieb beispielsweise als rotierender Elektromotor ausgebildet ist und sich stets in dieselbe Rotationsrichtung bewegt, während der Mitnehmer durch eine geschickte Ausgestaltung der Kurbelschwinge immer nur zwischen der Eingriffsposition und der Freigabeposition hin und her umgestellt wird. Dies erleichtert die Ansteuerung und Auslegung des Antriebs. Zudem ist es möglich, dass durch die Kurbelschwinge jeweils zwei Totlagen definiert werden, die der Eingriffsposition bzw. der Freigabeposition des Mitnehmers entsprechen und diesen somit in einem stabilen, das heißt gegenüber äußeren Kräften sehr widerstandsfähigen, Zustand halten. In den Totlagen sind eine Kurbel und eine Koppel der Kurbelschwinge parallel zueinander ausgerichtet. Dies umfasst auch Situationen, in denen die Kurbel und die Koppel der Kurbelschwinge sich nicht in derselben Ebene bewegen, wo aber eine Projektion der Kurbel und eine Projektion der Koppel in eine senkrecht zur Drehachse des ersten Antriebs ausgerichtete Ebene parallel zu einander ausgerichtet sind.

In einer bevorzugten Ausführungsform ist der Mitnehmer starr mit einer der Wellen gekoppelt. Eine Kopplung des Mitnehmers mit der Welle kann insbesondere durch Verpressen, Aufschrumpfen, Schrauben, Kleben, Schweißen, Löten oder ähnliche Verfahren erfolgen.

Alternativ kann der Mitnehmer auch um einen vorbestimmten Winkel, insbesondere zwischen 45° und 135°, zwischen 60° und 120°, zwischen 75° und 105°, zwischen 80° und 100°, zwischen 85° und 95° oder bevorzugt um 90° relativ zu einer der Wellen schwenkbar mit dieser Welle gekoppelt sein. Bei dem vorbestimmten Winkel kann es sich beispielsweise um einen durch zwei Anschläge definierten Winkeln handeln, wobei der Mitnehmer relativ zur Welle frei zwischen den beiden Anschlägen geschwenkt werden kann. Eine solche Ausgestaltung ermöglicht es, dass die Welle sich gegenüber dem Mitnehmer um den vorbestimmten Winkel bewegen kann, ohne den Mitnehmer zu bewegen. Dies erhöht die Flexibilität der Ansteuerung der Mitnehmer durch die Welle insbesondere dann, wenn mehr als ein Mitnehmer, bevorzugt mehr als zwei Mitnehmer mit derselben Welle gekoppelt sind.

In einer weiteren bevorzugten Ausführungsform ist der Mitnehmer ein erster Mitnehmer, der mit einer ersten der Wellen gekoppelt ist, wobei die Vorrichtung ferner einen zweiten Mitnehmer umfasst, der auch mit der ersten der Wellen gekoppelt ist.

Bei der "ersten Welle" handelt es sich bevorzugt um die am weitesten von der Basis entfernbare Welle, wobei grundsätzlich jedoch auch eine andere der Wellen des Kopplungsmechanismus mit dem Mitnehmern gekoppelt sein kann. Durch zwei Mitnehmer auf derselben Welle ist es möglich, das zu bewegende Objekt zwischen den Mitnehmern definiert aufzunehmen oder einzuschließen und in Längsrichtung hin und her zu bewegen, beispielsweise aus einem Regal auf eine Ladefläche zu ziehen oder von einer Ladefläche in das Regal zu schieben, während das Objekt zwischen den Mitnehmern eingefangen ist. Unter "Einschließen" und "Aufnehmen" ist im vorliegenden Zusammenhang gemeint, dass das Objekt in Längsrichtung zwischen den beiden Mitnehmern angeordnet werden kann und bei in Eingriffsposition befindlichen Mitnehmern eine Position des Objekts zwischen den Mitnehmern gehalten wird, auch wenn sich der Arm in Längsrichtung bewegt. Hierzu sind die Mitnehmer und das Objekt geeignet dimensioniert.

In einer bevorzugten Weiterbildung dieser Ausführungsform ist der erste Mitnehmer starr mit der ersten der Wellen gekoppelt, während der zweite Mitnehmer um einen vorbestimmten Winkel, insbesondere zwischen 45° und 135°, bevorzugt zwischen 60° und 120°, weiter bevorzugt zwischen 75° und 105°, weiter bevorzugt zwischen 80 und 100°, weiter bevorzugt zwischen 85° und 95° und weiter bevorzugt um 90° relativ zu dem ersten Mitnehmer schwenkbar mit der ersten der Wellen gekoppelt ist.

Diese bevorzugte Weiterbildung ermöglicht beispielsweise auch, einen dritten Mitnehmer mit der ersten der Wellen besonders vorteilhaft zu koppeln. Durch die schwenkbare Kopplung eines der Mitnehmer mit der Welle kann die Welle um den Bereich des vorbestimmten Winkels rotieren, dabei beispielsweise den ersten Mitnehmer zwischen der Eingriffsposition und der Freigabeposition umstellen, während der zweite Mitnehmer noch in der Freigabeposition ruht und während des Umstellens des ersten Mitnehmers darin verbleibt. Erst bei weiterem Drehen der Welle, beispielsweise bei einer Drehung von über 90°, wird beispielsweise der zweite Mitnehmer aus der Freigabeposition in die Eingriffsposition umgestellt, sodass der erste Mitnehmer und der zweite Mitnehmer nicht mehr fest miteinander gekoppelt sind, sondern durch den vorbestimmten Winkel ein Toleranzbereich gebildet wird.

Durch die oben beschriebene Erfindung, insbesondere ihre bevorzugten Ausführungsformen ist es möglich, eine kompakte und leichte Transportvorrichtung zum Ein- und Auslagern von Ladehilfsmitteln in Lagerregalsysteme bereitzustellen, so dass der erste Antrieb zum Umstellen der Mitnehmer, welche in die Regaltiefe (Z-Richtung) fahren, nicht unmittelbar in der Nähe des Mitnehmers angeordnet sein muss. Der erste Antrieb kann sich stattdessen auch an dem festen Teil der Basis der Vorrichtung befinden, während eine Übertragung des durch den ersten Antrieb aufgebrachten Drehmoments und damit eine Drehbewegung des ersten Antriebs durch den Kopplungsmechanismus rein mechanisch über eine oder mehrere Teleskopstufen an den Mitnehmer erfolgen kann. Insbesondere ist es möglich, dass die zumindest zwei Wellen über ihre Zahnlänge in positiver oder negativer Z-Richtung aneinander entlang gleiten können, so dass die Zähne der zumindest zwei Wellen über die verschiedenen Positionen des Mitnehmers und damit auch des Objektes miteinander in Eingriff stehen.

Auf diese Weise kann die aufwendige Übertragung von Energie und Daten von der Basis auf den den Mitnehmer tragenden Arm vermieden werden, was insbesondere auch dazu führt, dass nicht nur ein Übertragungskabel samt Führung vermieden werden kann, sondern die Abmessungen und das Gewicht des Arms können erheblich reduziert werden. Dies ist insbesondere der Fall weil es erfindungsgemäß auch nicht mehr erforderlich ist, dass an dem Mitnehmer, das heißt an einer äußeren Stelle des Arms, ein Antrieb für den Mitnehmer angeordnet ist. Das eingesparte Gewicht des Arms und der gesamten Vorrichtung führt dazu, dass auch die Bedienzeit reduziert werden kann, weil durch das reduzierte Gewicht die Trägheit der Vorrichtung reduziert wird und daher die durch die Vorrichtung und ihre Bestandteile erzielten Geschwindigkeiten erhöht werden können.

Die Wellen können unterhalb des Arms, oberhalb des Arms oder neben dem Arm angeordnet sein. Es ist möglich, die Wellen oder die Elemente des Arms als Teleskopstufen auszuführen, die nebeneinander oder übereinander ineinander eingreifen und in grundsätzlich bekannter Weise aneinander gekoppelt sind.

Weitere Merkmale und Vorteile der Erfindung ergeben sich aus der nachfolgenden Figurenbeschreibung und der Gesamtheit der Patentansprüche.

Schließlich betrifft die vorliegende Erfindung eine Transportvorrichtung zum Transportieren eines Objekts entlang einer Gasse eines Lagerregals, wobei die Transportvorrichtung eine oben beschriebene Vorrichtung zum Einlagern und/oder Auslagern des Objekts in und/oder aus einem Lagerregalfach aufweist. Eine solche Transportvorrichtung wird in Fachkreisen auch als "Shuttle" bezeichnet und dient dazu, verschiedene Lagerregalfächer anzufahren und Objekte zu und/oder von den Lagerregalfächern zu transportieren.

### KURZE FIGURENBESCHREIBUNG

Figur 1 zeigt eine schematische Ansicht eines Teleskoparms im ausgefahrenen Zustand mit teilweise ausgeschwenkten Mitnehmern.
Figur 2 zeigt eine schematische Seitenansicht eines Lastaufnahmegeräts mit den Mitnehmern in eingeschwenkter Stellung.
Figur 3 zeigt eine schematische Draufsicht eines Lastaufnahmegeräts mit den Teleskoparmen im ausgefahrenen Zustand und mit den Mitnehmern in eingeschwenkter Stellung.
Figur 4 zeigt eine schematische Darstellung einer Anwendung einer bevorzugten Ausführungsform.

### WEGE ZUR AUSFÜHRUNG DER ERFINDUNG

In den Figuren und der nachfolgenden Figurenbeschreibung werden gleiche Elemente durch gleiche Bezugszeichen gekennzeichnet und eine wiederholende Beschreibung wird weitgehend ausgelassen.

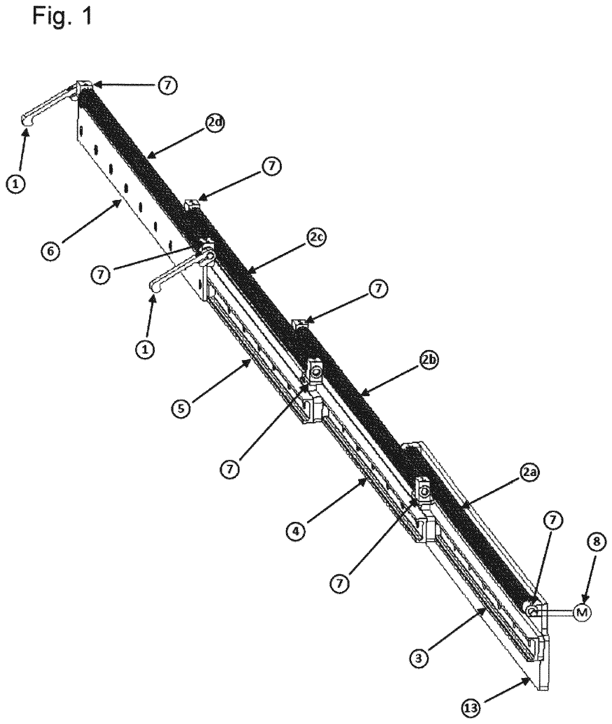

Figur 1 zeigt schematisch einen Teil eines Lastaufnahmegeräts, nämlich einen Teleskoparm 13, der zu bewegende Objekte, in dieser Ausführungsform Kisten oder Kartons, in oder aus einem Regalfach befördern kann. Der Teleskoparm ist ausgefahren und mit vier Elementen in Form von Teleskopstufen 3, 4, 5, 6 ausgestaltet. An der Oberseite der vier Teleskopstufen 3, 4, 5, 6 ist in dieser Ausführungsform jeweils eine stirnverzahnte Welle 2a, 2b, 2c, 2d montiert. Diese Wellen 2a, 2b, 2c, 2d können in einer anderen Ausführungsform auch unterhalb oder seitlich des Teleskoparms 13 montiert sein. Vorliegend sind die Wellen 2a, 2b, 2c, 2d über Lager 7 oberhalb eines Profils der jeweiligen Teleskopstufe 3, 4, 5, 6 gelagert.

An der ersten, nicht ausfahrbaren Teleskopstufe 3 ist zusätzlich ein erster Antrieb 8 positioniert, der mit der stirnverzahnten Welle 2a wirkverbunden ist. Die Welle 2a greift in Welle 2b ein, die wiederum in Welle 2c eingreift, welche in Welle 2d eingreift. Mittels dieses Ineinandergreifens der Wellen 2a-2d ist eine Übertragung von Momenten von einem ersten Ende des Arms im Bereich des ersten Antriebs 8 zu einem zweiten Ende des Arms möglich. An der letzten Teleskopstufe 6 des Arms 13 sind zwei Mitnehmer 1 an der Welle 2d befestigt. Diese können durch den ersten Antrieb 8 und die Wellen 2a, 2b, 2c, 2d ein- und ausgeschwenkt werden, wobei der ausgeschwenkte Zustand derjenige Zustand ist, in dem kein Lasttransport stattfinden kann, weil die Mitnehmer aus ihrem Wirkbereich herausgeschwenkt sind und somit keine formschlüssige Verbindung mit dem zu bewegenden Objekt herstellen können. Im Gegensatz dazu ist der eingeschwenkte Zustand derjenige Zustand in dem die Mitnehmer in ihren jeweiligen Wirkbereich eingeschwenkt sind.

In der vorliegenden Ausführungsform ist der erste Antrieb 8 beispielsweise über Zahnräder, eine Kette oder einen Riemen mit der Welle 2a verbunden.

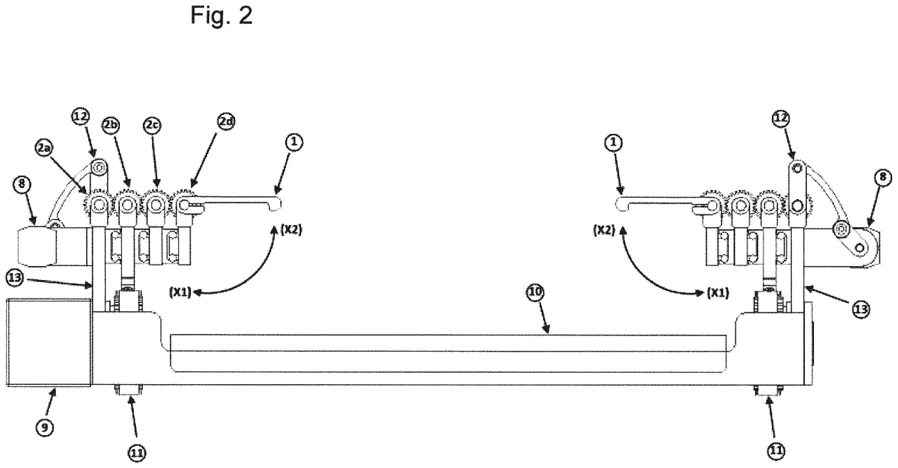

In Figur 2 ist eine weitere Ausführungsform dargestellt, bei welcher der erste Antrieb 8 mittels einer Kurbelschwinge 12 mit den Wellen wirkverbunden ist.

Figur 2 stellt eine Seitenansicht eines Lastaufnahmegeräts mit jeweils einem Teleskoparm 13 im linken und im rechten Bereich der Figur schematisch dar. Die oberhalb der Teleskopstufen 3, 4, 5, 6 gelagerten, stirnverzahnten Wellen 2a, 2b, 2c, 2d greifen ineinander, wobei die in Kraftflussrichtung letzte Welle 2d jeweils mit einem Mitnehmer 1 verbunden ist. Die jeweils in Kraftflussrichtung erste Welle 2a ist über die Kurbelschwinge 12 mit dem ersten Antrieb 8 verbunden. Diese Ausführungsform erlaubt es, dass der erste Antrieb 8 sowohl für ein Einschwenken des Mitnehmers 1 als auch für ein Ausschwenken des Mitnehmers 1 in derselben Drehrichtung angetrieben werden kann, was eine einfache Steuerung ermöglicht.

Die Mitnehmer 1 werden durch den ersten Antrieb 8 bewegt, da sie auf den Wellen 2d, die über die Wellen 2a, 2b und 2c mit dem ersten Antrieb 8 wirkverbunden sind, angebracht, insbesondere aufgepresst sind. Die Kurbelschwinge 12 weist zwei Totlagen auf. Durch die Kopplung der Welle 2a über eine Kurbelschwinge 12 mit dem ersten Antrieb 8 können auch für die Mitnehmer 1 zwei Totlagen bestimmt werden, die bevorzugt der Freigabeposition (X1) und der Eingriffsposition (X2) entsprechen. Dies hat ein selbstständig stabiles Halten der Mitnehmer 1 in der gewünschten Position zur Folge.

Weiterhin ist zwischen den Teleskoparmen 13 eine Ladefläche 10 gezeigt, auf die das zu bewegende Objekt gefahren werden kann. Unterhalb der Teleskoparme 13 befindet sich jeweils ein Zahnriemen 11, der durch einen zweiten Antrieb 9 angetrieben wird und die zweite Teleskopstufe 4 jedes Teleskoparms 13 bewegen kann.

In der vorliegenden Ausführungsform sind die Teleskoparme 13 mit Kugelkäfig-Teleskopschienen ausgestattet. Diese sind miteinander so verbunden, dass eine linear-angetriebene Bewegung der zweiten Teleskopstufe 4 zur Folge hat, dass die Relativbewegung zwischen allen beliebigen zwei sukzessiven Teleskopstufen gleich, d. h. zu gleichen Teilen, erfolgt.

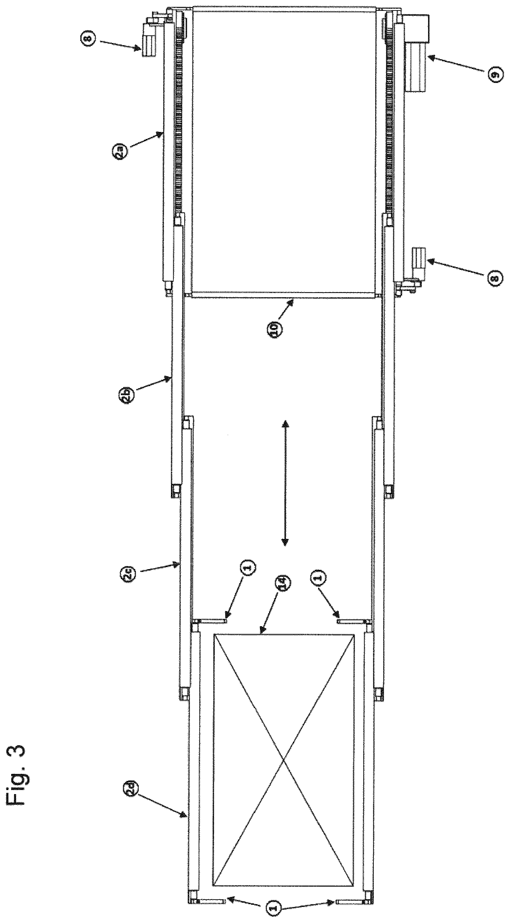

Figur 3 zeigt eine schematische Draufsicht eines bevorzugten Lastaufnahmegeräts. Ein zu bewegendes Objekt 14 ist formschlüssig durch die Mitnehmer 1 umschlossen. Durch ein Verfahren der Teleskoparme 13 wird das Objekt 14 in die gewünschte Position verschoben. Soll das Objekt 14 auf die Ladefläche 10 des Lastaufnahmegeräts verschoben werden, so werden die Teleskoparme 13 in die mittlere, nichtausgefahrene Stellung positioniert. Nun ist das Verfahren des Lastaufnahmegeräts z. B. mit einem Shuttle entlang einer Gasse und/oder in vertikaler Richtung möglich.

In einer bevorzugten Ausführungsform der Erfindung ist auch ein Verfahren der Arme 13 in die gegenüberliegende Richtung möglich, so dass das Objekt 14 von einer Ablage in die nichtausgefahrene Stellung, d. h. auf die Ladefläche 10, und von dort in eine gegenüberliegende Ablage bewegt werden kann. In der Darstellung der Figur 3 würde dies ein Verfahren der Teleskopstufen 3, 4, 5, 6 nach rechts über die Ladefläche 10 hinaus bedeuten.

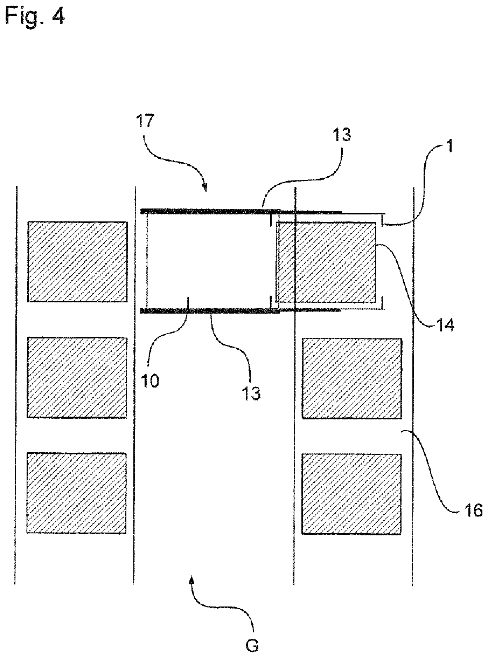

Figur 4 zeigt schematisch eine mögliche Anwendung einer bevorzugten Ausführungsform der Erfindung. Links und rechts in Figur 4 ist jeweils ein Regal 16 dargestellt, auf denen beispielhaft jeweils drei zu bewegende Objekte 14 eingelagert sind. Zwischen den Regalen 16 ist eine Gasse G gebildet, entlang der ein auch als Shuttle 17 bezeichneter Transportwagen bewegt werden kann, um einzelne Lagerpositionen in den Regalen 16 anzufahren und darin angeordnete Objekte 14 einzulagern oder auszulagern.

Auf dem Shuttle 17 ist eine bevorzuge Ausführungsform einer Vorrichtung zum Bewegen von Objekten, wie sie vorstehend beschrieben wurde, angebracht, um die zu bewegenden Objekte 14 auf die Ladefläche 10 des Shuttles 17 zu ziehen oder von dieser herunterzuschieben.

Zwei Teleskoparme 13 sind an dem Shuttle 17 montiert und ermöglichen eine sichere Bewegung der Objekte 14. Bei den Objekten 14 handelt es sich bevorzugt um Ladehilfsmittel, beispielsweise Kisten, Behälter, Kartons oder Trays, die eine genormte Größe haben. Bevorzugt ist ein Abstand zwischen den beiden Teleskoparmen 13 auf die genormte Größe angepasst und so bemessen, dass zwischen den an den Teleskoparmen 13 angeordneten Mitnehmern 1 ein Objekt 14 formschlüssig eingeschlossen werden kann.

Das Shuttle 17 ist in der in Figur 4 gezeigten Situation vor einem in einem Regal 16 gelagerten Objekt 14 positioniert und beide Teleskoparme 13 sind teilweise ausgefahren. Die an der äußersten Stufe der Teleskoparme 13 angebrachten Mitnehmer 1 sind eingeschwenkt und umschließen das Objekt 14 formschlüssig. Das Objekt 14 befindet sich in der in Figur 4 gezeigten Situation in einer Zwischenposition auf seinem Weg vom Regal 16 auf die Ladefläche 10. Es befindet sich somit teilweise sowohl auf dem Regal 16 als auch auf der Ladefläche 10.

Durch das Shuttle 17 kann das Objekt 14 dann entlang der Gasse G zu einer anderen Lagerstelle in einem der Regale 16 oder beispielsweise zu einer Entnahmestelle für das Objekt 14 transportiert werden. Das Shuttle 17 kann hierfür beispielsweise auch über einen Lift in vertikaler Richtung bewegt werden.

### BEZUGSZEICHENLISTE

- 1: Mitnehmer
- 2a, 2b, 2c, 2d: Welle
- 3, 4, 5, 6: Teleskopstufen
- 7: Lager
- 8: erster Antrieb
- 9: zweiter Antrieb
- 10: Ladefläche
- 11: Zahnriemen
- 12: Kurbelschwinge
- 13: Teleskoparm
- 14: Objekt
- 16: Regal
- 17: Shuttle
- G: Gasse

## Patentansprüche

1. Vorrichtung zum Bewegen eines Objekts (14) entlang einer Längsrichtung zumindest zwischen einer ersten Position und einer zweiten Position, umfassend
eine Basis,
einen Arm (13), der an der Basis angeordnet ist,
einen Mitnehmer (1), der durch den Arm (13) entlang der Längsrichtung bewegbar ist, wobei der Mitnehmer (1) relativ zum Arm (13) schwenkbar und durch eine Schwenkbewegung zwischen einer Eingriffsposition (X2) und einer Freigabeposition (X1) umstellbar ist, und
einen ersten Antrieb (8) zum Umstellen des Mitnehmers (1),
wobei der erste Antrieb (8) über einen Kopplungsmechanismus mit dem Mitnehmer (1) wirkverbunden ist, **dadurch gekennzeichnet, dass** der Kopplungsmechanismus zumindest zwei relativ zueinander entlang der Längsrichtung verfahrbare, mit Zähnen versehene Wellen (2a, 2b, 2c, 2d) aufweist,
wobei die Wellen (2a, 2b, 2c, 2d) über die Zähne miteinander in Eingriff stehen, so dass eine Drehbewegung des ersten Antriebs (8) mit der Schwenkbewegung des Mitnehmers (1) gekoppelt ist.

2. Vorrichtung nach Anspruch 1, wobei der Arm (13) zumindest zwei relativ zueinander entlang der Längsrichtung verfahrbare Elemente (3, 4, 5, 6) aufweist,
wobei der Arm (13) bevorzugt als Teleskoparm ausgebildet ist,
insbesondere wobei eines (3) der Elemente relativ zur Basis ortsfest angeordnet ist, während das zumindest eine weitere Element (4, 5, 6) relativ zur Basis entlang der Längsrichtung verfahrbar ist,
insbesondere wobei der Mitnehmer (1) an einem in der Längsrichtung am weitesten von der Basis entfernbaren (6) der Elemente angeordnet ist.

3. Vorrichtung nach einem der vorhergehenden Ansprüche, wobei zumindest eine der Wellen (2a, 2b, 2c, 2d) an dem Arm (13) gelagert ist, wobei bevorzugt alle der Wellen (2a, 2b, 2c, 2d) an dem Arm (13) gelagert sind.

4. Vorrichtung nach Anspruch 2 oder 3, wobei an jedem der Elemente (3, 4, 5, 6) des Arms je eine Welle (2a, 2b, 2c, 2d) des Kopplungsmechanismus drehbar gelagert ist.

5. Vorrichtung nach einem der vorhergehenden Ansprüche, wobei der Mitnehmer (1) ein erster Mitnehmer (1) ist, der mit einer ersten der Wellen (2a, 2b, 2c, 2d) gekoppelt ist,
ferner umfassend einen zweiten Mitnehmer (1), der auch mit der ersten der Wellen (2a, 2b, 2c, 2d) gekoppelt ist, so dass zwischen dem ersten Mitnehmer (1) und dem zweiten Mitnehmer (1) ein zu bewegendes Objekt einschließbar und in der Längsrichtung hin und her bewegbar ist.

6. Vorrichtung nach Anspruch 5, wobei der erste Mitnehmer (1) starr mit der ersten der Wellen (2a, 2b, 2c, 2d) gekoppelt ist und wobei der zweite Mitnehmer (1) um einen vorbestimmten Winkel, insbesondere zwischen 45° und 135°, bevorzugt 90°, relativ zu dem ersten Mitnehmer (1) schwenkbar mit der ersten der Wellen (2a, 2b, 2c, 2d) gekoppelt ist.

7. Vorrichtung nach einem der vorhergehenden Ansprüche, wobei die Zähne der Wellen (2a, 2b, 2c, 2d) als Stirnverzahnung ausgebildet sind,
wobei die Stirnverzahnung bevorzugt achsparallel ausgebildet ist,
insbesondere wobei die Zähne über mindestens 50%, bevorzugt mindestens 70%, weiter bevorzugt mindestens 90% der gesamten achsparallelen Länge der Wellen (2a, 2b, 2c, 2d) verlaufen.

8. Vorrichtung nach einem der vorhergehenden Ansprüche, wobei der erste Antrieb (8) über eine Kurbelschwinge (12) mit dem Kopplungsmechanismus wirkverbunden ist,
insbesondere wobei durch die Kurbelschwinge zwei Totlagen definierbar sind, in denen eine Kurbel und eine Koppel der Kurbelschwinge parallel zueinander ausgerichtet sind.

9. Vorrichtung nach einem der vorhergehenden Ansprüche, wobei der Mitnehmer (1) starr mit einer der Wellen (2a, 2b, 2c, 2d) gekoppelt ist
oder wobei der Mitnehmer (1) um einen vorbestimmten Winkel, insbesondere zwischen 45° und 135°, bevorzugt 90°, relativ zu einer der Wellen (2a, 2b, 2c, 2d) schwenkbar mit dieser Welle (2a, 2b, 2c, 2d) gekoppelt ist.

10. Transportvorrichtung (17) zum Transportieren eines Objekts entlang einer Gasse (G) eines Lagerregals (16), wobei die Transportvorrichtung (17) eine Vorrichtung nach einem der vorhergehenden Ansprüche zum Einlagern und/oder Auslagern des Objekts (14) in und/oder aus einem Lagerregalfach aufweist.

## Claims

1. Apparatus for moving an object (14) in a longitudinal direction at least between a first position and a second position, comprising
a base,
an arm (13) which is arranged on the base,
an entraining means (1) which can be moved by the arm (13) in the longitudinal direction, the entraining means (1) being pivotable relative to the arm (13) and being able to be changed over between an engaging position (X2) and a releasing position (Xl) by a pivoting movement, and
a first drive (8) for changing over the entraining means (1),
the first drive (8) being operatively connected to the entraining means (1) by a coupling mechanism,
**characterised in that** the coupling mechanism has at least two shafts (2a, 2b, 2c, 2d) which are displaceable relative to one another in the longitudinal direction and which are provided with teeth,
the shafts (2a, 2b, 2c, 2d) being in engagement with one another by means of the teeth, a rotary movement of the first drive (8) thus being coupled to the pivoting movement of the entraining means (1).

2. Apparatus according to claim 1, wherein the arm (13) has at least two members (3, 4, 5, 6) which are displaceable relative to one another in the longitudinal direction,
wherein the arm (13) is preferably in the form of a telescopic arm,
wherein, in particular, one (3) of the members is arranged in a fixed position relative to the base, whereas the at least one other member (4, 5, 6) is displaceable in the longitudinal direction relative to the base,
and wherein, in particular, the entraining means (1) is arranged on a one (6) of the members which can be moved away from the base in the longitudinal direction for the longest distance.

3. Apparatus according to one of the preceding claims, wherein at least one of the shafts (2a, 2b, 2c, 2d) is mounted on the arm (13), with all the shafts (2a, 2b, 2c, 2d} preferably being mounted on the arm (13).

4. Apparatus according to claim 2 or 3, wherein one shaft (2a, 2b, 2c, 2d) of the coupling mechanism is rotatably mounted on each of the members (3, 4, 5, 6) of the arm.

5. Apparatus according to one of the preceding claims, wherein the entraining means (1) is a first entraining means (1) which is coupled to a first one of the shafts (2a, 2b, 2c, 2d),
also comprising a second entraining means (1) which is also coupled to the first one of the shafts (2a, 2b, 2c, 2d), an object to be moved thus being able to be enclosed between the first entraining means (1) and the second entraining means (1) and thus being able to be moved backwards and forwards in the longitudinal direction.

6. Apparatus according to claim 5, wherein the first entraining means (1) is rigidly coupled to the first one of the shafts (2a, 2b, 2c, 2d), and wherein the second entraining means (1) is coupled to the first one of the shafts (2a, 2b, 2c, 2d) in such a way as to be pivotable through a predetermined angle of, in particular, between 45° and 135°, and preferably of 90°, relative to the first entraining means (1).

7. Apparatus according to one of the preceding claims, wherein the teeth of the shafts (2a, 2b, 2c, 2d) are in the form of sets of splines,
wherein the sets of splines are preferably of a form parallel to the shaft axes,
and wherein, in particular, the teeth extend for at least 50%, and preferably for at least 70%, and as a further preference for at least 90%, of the total length of the shafts (2a, 2b, 2c, 2d) parallel to their axes.

8. Apparatus according to one of the preceding claims, wherein the first drive (8) is operatively connected to the coupling mechanism by a crank-rocker mechanism (12),
and wherein, in particular, two dead-centre positions can be defined by the crank-rocker mechanism in which a crank and a connecting rod of the crank-rocker mechanism are aligned parallel to one another.

9. Apparatus according to one of the preceding claims, wherein the entraining means (1) is rigidly coupled to one of the shafts (2a, 2b, 2c, 2d)
or wherein the entraining means (1) is coupled to one of the shafts (2a, 2b, 2c, 2d) in such a way as to be pivotable through a predetermined angle of, in particular, between 45° and 135°, and preferably of 90°, relative to said shaft.

10. Transporting apparatus {17) for transporting an object along an aisle (G) of storage racking (16), wherein the transporting apparatus (17) has an apparatus according to one of the preceding claims for storing and/or retrieving the object (14) in and/or from a storage racking bay.

## Revendications

1. Dispositif de déplacement d'un objet (14) le long d'une direction longitudinale au moins entre une première position et une deuxième position, comprenant
une base,
un bras (13), qui est agencé au niveau de la base,
un entraîneur (1), qui peut être déplacé par le bras (13) le long de la direction longitudinale, dans lequel l'entraîneur (1) est pivotant par rapport au bras (13) et déplaçable par un mouvement de pivotement entre une position de mise en prise (X2) et une position de libération (X1), et
un premier entraînement (8) pour le déplacement de l'entraîneur (1),
dans lequel le premier entraînement (8) est en liaison active avec l'entraîneur (1) par le biais d'un mécanisme d'accouplement,
**caractérisé en ce que**
le mécanisme d'accouplement présente au moins deux arbres (2a, 2b, 2c, 2d) dotés de dents, mobiles l'un par rapport à l'autre le long de la direction longitudinale,
dans lequel les arbres (2a, 2b, 2c, 2d) sont en prise l'un avec l'autre par le biais des dents, de sorte qu'un mouvement de rotation du premier entraînement (8) est couplé avec le mouvement de pivotement de l'entraîneur (1).

2. Dispositif selon la revendication 1, dans lequel le bras (13) présente au moins deux éléments (3, 4, 5, 6) mobiles l'un par rapport à l'autre le long de la direction longitudinale,
dans lequel le bras (13) est réalisé de préférence en tant que bras télescopique,
en particulier dans lequel un (3) des éléments est agencé fixe par rapport à la base, pendant que l'au moins un autre élément (4, 5, 6) est mobile par rapport à la base le long de la direction longitudinale,
en particulier dans lequel l'entraîneur (1) est agencé au niveau d'un des éléments pouvant être retiré (6) de la base le plus loin dans la direction longitudinale.

3. Dispositif selon l'une quelconque des revendications précédentes, dans lequel au moins un des arbres (2a, 2b, 2c, 2d) est logé au niveau du bras (13), dans lequel de préférence tous les arbres (2a, 2b, 2c, 2d) sont logés au niveau du bras (13).

4. Dispositif selon la revendication 2 ou 3, dans lequel respectivement un arbre (2a, 2b, 2c, 2d) du mécanisme d'accouplement est logé de manière rotative au niveau de chacun des éléments (3, 4, 5, 6) du bras.

5. Dispositif selon l'une quelconque des revendications précédentes, dans lequel l'entraîneur (1) est un premier entraîneur (1), qui est couplé à un premier des arbres (2a, 2b, 2c, 2d),
comprenant en outre un deuxième entraîneur (1), qui est également couplé avec le premier des arbres (2a, 2b, 2c, 2d), de sorte qu'entre le premier entraîneur (1) et le deuxième entraîneur (1), un objet à déplacer puisse être enfermé et déplacé en va-et-vient dans la direction longitudinale.

6. Dispositif selon la revendication 5, dans lequel le premier entraîneur (1) est couplé de manière rigide avec le premier des arbres (2a, 2b, 2c, 2d) et dans lequel le deuxième entraîneur (1) est couplé avec le premier des arbres (2a, 2b, 2c, 2d) de manière pivotante d'un angle prédéterminé, en particulier entre 45° et 135°, de préférence de 90°, par rapport au premier entraîneur (1).

7. Dispositif selon l'une quelconque des revendications précédentes, dans lequel les dents des arbres (2a, 2b, 2c, 2d) sont réalisées en tant que denture frontale,
dans lequel la denture frontale est réalisée de préférence parallèle à l'axe,
en particulier dans lequel les dents s'étendent sur au moins 50%, de préférence au moins 70 %, plus préférablement au moins 90 % de la longueur totale parallèle à l'axe des arbres (2a, 2b, 2c, 2d).

8. Dispositif selon l'une quelconque des revendications précédentes, dans lequel le premier entraînement (8) est en liaison active avec le mécanisme d'accouplement par le biais d'une manivelle à quatre barres (12),
en particulier dans lequel deux positions mortes, dans lesquelles une manivelle et une bielle de la manivelle à quatre barres sont orientées parallèlement l'une à l'autre, peuvent être définies par la manivelle à quatre barres.

9. Dispositif selon l'une quelconque des revendications précédentes, dans lequel l'entraîneur (1) est couplé de manière rigide avec l'un des arbres (2a, 2b, 2c, 2d)
ou dans lequel l'entraîneur (1) est couplé de manière pivotante d'un angle prédéterminé, en particulier entre 45° et 135°, de préférence de 90°, par rapport à un des arbres (2a, 2b, 2c, 2d), avec cet arbre (2a, 2b, 2c, 2d).

10. Dispositif de transport (17) pour le transport d'un objet le long d'une voie (G) d'un rayonnage (16), dans lequel le dispositif de transport (17) présente un dispositif selon l'une quelconque des revendications précédentes pour le stockage et/ou le déstockage de l'objet (14) dans et/ou hors d'un compartiment de rayonnage.
